# EUROPEAN PATENT APPLICATION

(11) **EP 4 722 573 A1**
(43) Date of publication of application: **08.04.2026**
(21) Application number: 25205153.7
(22) Date of filing: 27.09.2025
(51) Int. Cl.: F16L 3/18, B60R 16/02, F16L 7/00, F16L 55/168, F16L 57/06, G01F 1/00, G01K 1/00, H02G 1/08, H02G 3/32

(54) **SUPPORT MEMBER FOR ROUTING A FLUIDLINE OR ELECTRICAL LINE IN A STRUCTURAL MEMBER**

(30) Priority: 07.10.2024 US 202418907943
(71) Applicant: ArvinMeritor Technology, LLC, Troy, MI 48084 (US)
(72) Inventor: Adkins, Alexander, Troy, 48084 (US); Hackett, Bryan, Davisburg, 48350 (US); Catania, Stephen, Clarkston, 48348 (US); Rodrigues, Paulo, Clinton Township, 48036 (US)
(74) Representative: Whitfield, Jack Stephen

(57) **Abstract**

A support member (100) for routing fluid or electrical lines within structural members comprises a conduit (102) having a wall (104) that defines a passage (106) configured to receive at least one line. The passage within the conduit is configured to permit free movement of the at least one line along a longitudinal axis of the conduit. Further, the support member comprises a plurality of longitudinal slots (120, 122, 124, 126) formed in a wall of the conduit and configured to define, in an expanded state of the support member, a plurality of arms (220, 222, 224, 226, 240, 242, 244, 246) radially extending from the conduit and spaced apart from each other about a circumference of the conduit. The support member may be configured for deployment within a structural member of a vehicle, including but not limited to an axle of the vehicle.

## Description

### FIELD

The application claims the benefit of the priority under 35 U.S.C. § 119(e) to U.S. Provisional Application No. 18/907943 filed on October 7, 2024, and titled "Support member for routing a fluid or electrical line in a structural member", the entire disclosure of which is hereby incorporated by reference in its entirety. The present disclosure relates generally to support members and, in particular, to a support member for routing a fluid or electrical line in a structural member.

### BACKGROUND

In the manufacture of many products, it is sometimes necessary to route lines for the conveyance of fluids and/or electrical signals (e.g., flexible tubes, wires, etc.) within channels of structural members of such products. For example, in the case of vehicles, it is often desirable to deploy fluid lines through an interior channel of an axle (as a specific example of a structural member) in order to provide pressurized fluids (e.g., air) to one or more tires supported by the axle. Similarly, electrical lines are often routed through frame or body elements of a vehicle (as further examples of structural members) in order to provide control and/or power signals to various electrical components of the vehicle, or to obtain readings from sensors deployed within the vehicle. Those skilled in the art will recognize that, while examples of structural elements within vehicles have been described herein, structural members having similar functions may be found in a variety of products.

In use, such products often experience significant vibrations during use, and contact between any lines deployed within structural members experiencing such vibrations may lead to abrasion and even failure of such lines. Furthermore, it is often the case that, during manufacture of the product, such lines are deployed within a corresponding structural member prior to subjecting the structural member to further manufacturing processes such as welding or other thermally aggressive processes, which processes may also potentially lead to damage to the routed lines.

Thus, developments that would aid in the routing of lines within structural members, notwithstanding the hazardous environments sometimes presented by such structural members, would be a welcome addition in the art.

### SUMMARY

The above-described shortcomings are addressed through the provision of a support member for routing fluid or electrical lines within structural members in accordance with the instant disclosure. In particular, in an embodiment, a support member is provided that comprises a conduit having a wall that defines a passage configured to receive at least one line. The passage within the conduit is configured to permit free movement of the at least one line along a longitudinal axis of the conduit. Further, the support member comprises a plurality longitudinal slots formed in the wall of the conduit and configured to define, in an expanded state of the support member, a plurality of arms radially extending from the conduit.

In an embodiment, the conduit and plurality of arms are configured for deployment within a structural member of a vehicle, which structural member may comprise an axle.

In an embodiment, the plurality of arms are spaced apart from each about a circumference of the conduit and, in another embodiment, are equally spaced about the circumference of the conduit. The plurality of arms may comprise at least two arms.

In an embodiment, each arm of the plurality of arms comprises at least two linear sections defining the arm, and in a further embodiment, each arm of the plurality of arms comprises two linear sections defining the arm and forming a triangular shape relative to the longitudinal axis of the conduit. The linear sections defining each arm may be the same length.

In an embodiment, the plurality of arms includes a first set of arms at a first location along the longitudinal axis and a second set of arms at a second location along the longitudinal axis.

In an embodiment, the conduit comprises a first conduit part and second conduit part, where the first conduit part comprises, for each arm of the plurality of arms, a first linear section and where the second conduit comprises, for each arm of the plurality of arms, a second linear section. In this embodiment, distal ends of the first and second linear sections comprise complementary arm coupling features configured to connect the first and second linear sections to each other. Further this embodiment, an end of the first conduit part opposite the first linear section comprises a complimentary conduit coupling feature configured to connect the first conduit part to a third conduit part also comprising the complimentary conduit coupling feature.

In an embodiment, one or more sensors may be deployed on the support member. Such sensors may be deployed on the support member so as to be in contact with, or proximity to, an inner periphery of the channel. In an embodiment, the at least one sensor may comprise at least one of a temperature sensor, a vibration sensor and a fluid sensor.

### BRIEF DESCRIPTION OF THE DRAWINGS

The foregoing and other features and advantages will be discussed in detail in the following non-limiting description of specific embodiments in connection with the accompanying drawings, in which:
FIG. 1 is perspective view of a support member in accordance with the instant disclosure and shown in a collapsed state;
FIG. 2 is perspective view of a support member in accordance with the instant disclosure and shown in an extended state;
FIG. 3 is a cross-sectional view of a support member in accordance with the instant disclosure deployed within a structural member and having a line routed therethrough;
FIG. 4 is a cross-sectional view of an alternate embodiment of a support member in accordance with the instant disclosure;
FIGs. 5 and 6 are perspective views of another alternate embodiment of a support member in accordance with the instant disclosure; and
FIGs. 8 and 9 are detailed views of complementary arm coupling features in accordance with the embodiment of FIGs. 5 and 6.

### DETAILED DESCRIPTION OF THE PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the terms "substantially," "approximately" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

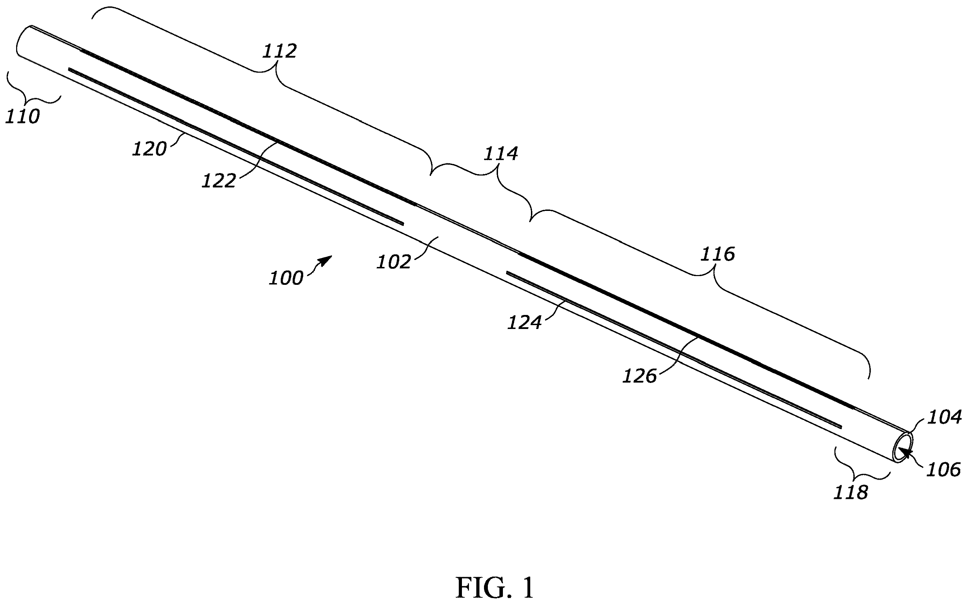

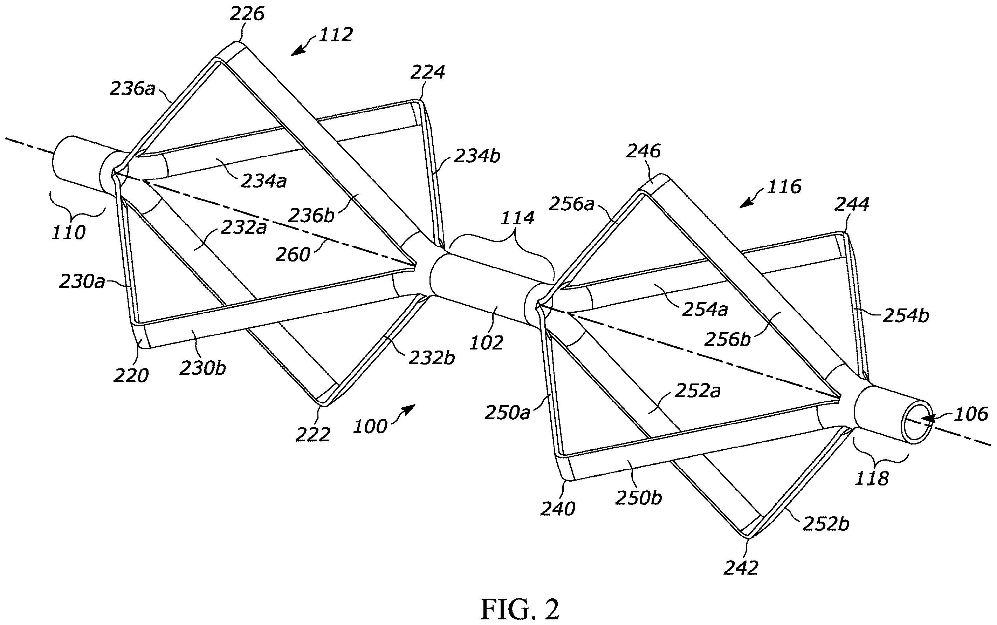

Referring now to FIGs. 1 and 2, a support member 100 is respectively illustrated in a collapsed/ un-extended state and in an expanded/extended state. The support member comprising a conduit 102 having a wall 104 that defines a passage 106 within the conduit. As depicted in FIGs. 1 and 2, the passage 106 is substantially cylindrical in shape, though this is not a requirement. Additionally, the passage 106 is dimensioned (i.e.., has a diameter) to permit free, unrestricted movement of at least one line through the passage 106 along a longitudinal axis 260 (FIG. 2) of the conduit 102. For example, in an embodiment of the support member 100 configured for use within an axle of a vehicle, the length of the conduit 102 (in the collapsed state) is approximately 21.1 inches (536 mm) with an internal diameter of approximately 0.5 inches (12.7 mm) and a wall thickness of approximately 0.0625 inches (1.5875 mm). However, it is appreciated that the dimensions of the conduit 102 may vary widely according to the needs of the specific application.

The conduit 102 may be fabricated from a variety of materials including metals, polymers, ceramic and braided materials, or combinations thereof, depending on the nature of the intended use. For example, in the case of a structural member that will be subjected to high heat treatments (such as welding) during a manufacturing process, materials including heat resistant polymers (such as Bakelite, ultraviolet (UV) cured resins or other known polymers) or high heat resistant braided materials may be used. As those skilled in the art will appreciate, still other materials may be preferable depending on the environment to which the conduit 102 will be exposed, and the instant disclosure is not limited in this regard.

As further shown, the conduit 102 comprises a plurality of regions 110-118 characterized by the presence, or lack thereof, of multiple longitudinal slots 120-126 formed therein. In the illustrated example, there are three slot-free regions 110, 114, 118 and two slotted regions 112, 116. As further shown, the slot-free regions 110, 114, 118 are disposed on either side of the slotted regions 112, 116. Although two slotted regions 112, 116 and three slot-free regions are depicted in FIG. 1, it is appreciated that fewer slotted regions (e.g., a single slotted region flanked by two slot-free regions) or more slotted regions (e.g., n slotted regions flanked/separated by n+1 slot-free regions, where n ≥ 3) may be provided in the conduit 102 as a matter of design choice.

In the collapsed/un-extended state of the support member 100 illustrated in FIG. 1, the overall shape of the conduit 102 will generally remain the same despite the presence of the multiple longitudinal slots 120-126. However, when the conduit 102 of the support member 100 is placed under compression, the support member 100 will assume its expanded/extended stated whereby the presence of the multiple longitudinal slots 120-126 will permit those portions of the conduit wall between such slots 120-126 and within the slotted regions 112, 116 to deform so as to define a plurality of arms as illustrated, for example, in FIG. 2 and described in further detail below.

The number of slots 120-126 formed in each of the slotted regions 112, 116 is equal to the number of arms to be provided by each of the slotted regions 112, 116 when the conduit 102 is placed in an extended or expanded state as depicted, for example, in FIG. 2. As illustrated in FIGs. 1 and 2, each of the slotted regions 112, 116 comprises four slots leading to the formation of four arms per slotted region. Generally, the conduit 102 should have at least two slots per slotted region such that two arms at a minimum are provided for each slotted region 112, 116, thereby minimizing any chance that the lines routed through the conduit 102 might contact the internal channel of the structural member in which the support member 100 is deployed. Nevertheless, it is understood that a greater number of slots/arms may be provided for each slotted region 112, 116 as a matter of design choice. Although FIGs. 1 and 2 depict each slotted region 112, 116 having a same number of respective slots (and resulting arms) formed therein, this is not a requirement, i.e., the slotted regions 112, 116 could have different numbers of slots/arms. Furthermore, while the slots/arms depicted in FIGs. 1 and 2 are disposed at equivalent angles about the circumference of the conduit 102 (e.g., if slot 122 in the first slotted region 112 is considered as being disposed at 0°, slot 126 in the second slotted region 116 is also disposed at 0°, whereas both slots 120, 124 are disposed at 90°, etc.), this is also not a requirement and the angular disposition of slots/arms can vary between different slotted regions.

Further still, in an embodiment, the slots 120-126 are evenly spaced about the circumference of the conduit 102. Thus, in the illustrated example of FIGs. 1 and 2, the respective sets of four slots 120, 122 and 124, 126 (only two shown for each set in FIG. 1) would be separated by approximately 90° about the circumference of the conduit 102. As a result, each of the resulting arms will also be spaced apart by approximately 90° about the circumference of the conduit 102. However, it is appreciated that even spacing of slots/arms about the circumference of the conduit 102 is not a requirement, and that uneven spacing may be equally employed.

FIG. 2 illustrates the support member 100 when placed in an extended or expanded state. To this end, a compressive force may be applied to either end of the conduit 102 as depicted in FIG. 1. As noted above, such a compressive force will naturally tend to cause the slotted regions 112, 116 to buckle such that those portions of the conduit wall 104 between the slots will radially extend away from the longitudinal axis 260 of the conduit 102, thereby forming a plurality of arms 220, 222, 224, 226, 240, 242, 244, 246 as shown. For example, in an embodiment, such deformation results in the formation of substantially straight or linear sections 230a, 230b, 232a, 232b, 234a, 234b, 236a, 236b, 250a, 250b, 252a, 252b, 254a, 254b, 256a, 256b for each of the respective arms 220, 222, 224, 226, 240, 242, 244, 246. Although substantially straight or linear sections are depicted in the instant Figures, it is appreciated these sections may have arcuate shapes such that the resulting arms are also substantially curved, while still radially extending. In the embodiment shown in FIGs. 1 and 2, the configuration slots within the slotted regions 112, 116 results in the formation of two sets of arms: a first set of arms 220, 222, 224, 226 in a first slotted region 112, and a second set of arms 240, 242, 244, 246 is the second slotted region 116.

As shown, the resulting pair (in the embodiment shown in FIG. 2) of linear sections 230a, 230b, 232a, 232b, 234a, 234b, 236a, 236b, 250a, 250b, 252a, 252b, 254a, 254b, 256a, 256b for each arm 220, 222, 224, 226, 240, 242, 244, 246 may be approximately equal in length. Once again, however, this is not a requirement and formation of the linear sections could be carried out in manner permitting the linear sections of each pair to be differing lengths.

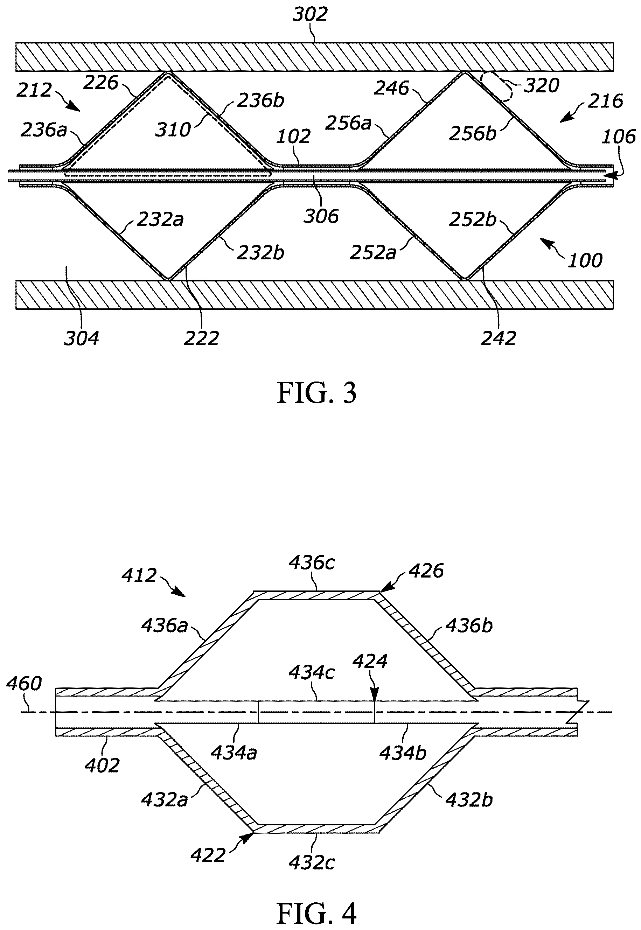

In an embodiment, the maximum radial extension of each arm 220, 222, 224, 226, 240, 242, 244, 246 away from the longitudinal axis 260 is approximately equal, though this is not a requirement. Additionally, although the angle formed where the linear sections 230a, 230b, 232a, 232b, 234a, 234b, 236a, 236b, 250a, 250b, 252a, 252b, 254a, 254b, 256a, 256b of each arm 220, 222, 224, 226, 240, 242, 244, 246 meet at the point of maximum arm extension is depicted as being approximately 90°, this is not a requirement and it appreciated that angular separations between the linear sections (if present) may be greater or lesser than this value as a matter of design choice. Formed in this manner, and as depicted in FIG. 3 by the dashed line relative to first arm 226, the linear sections 236a, 236b form a triangular shape 310 with respect to the longitudinal axis of the conduit.

FIG. 3 further depicts the support member 100 (in its expanded state) deployed within a channel 304 of a structural member 302 and having a line 306 routed through the passage 106 of the conduit 102. As shown, each of the depicted arms 222, 226, 242, 246 contacts an inner periphery of the channel 304, thereby substantially centering the line 306 within the channel 304. In this manner, for example, any vibrations of, or excessive thermal effects occurring to, the structural member 302 are absorbed, or at least minimized, by the support member 100, thereby also minimizing any chance of damage to the line 306. Although all of the depicted arms 222, 226, 242, 246 in FIG. 4 are shown in contact with the channel 304 periphery, this is not a requirement, i.e., not all of the arms need contact the periphery wall provided that the line 306 is not permitted to contact the channel 304 periphery. On the other hand, in the case where there are only the minimum number of two arms, separated by 180° about the circumference of the conduit 102, 302, it is preferable that the arms extended radially a sufficient amount so as to assure contact by the arms with the inner periphery of the channel 304. Where the plurality of arms are configured to contact the periphery of the channel 304, it may be desirable that such contact is made by the arms with sufficient force and resulting friction (caused by deflection of such arms as the support member 100 is inserted into the channel 304) so as to retain the support member 100 in its final position along the length of the channel 304. Additionally, though a single line 306 is depicted in FIG. 3, it is understood that two or more lines may be deployed within the passage 106, which would be, once again, configured to be sufficiently large to permit free, unrestricted movement of the two or more lines along the longitudinal axis of the conduit 102.

FIG. 3 further illustrates a schematically-depicted sensor 320 that may be optionally deployed on the support member 100. Although a single sensor 320 is illustrated in FIG. 3, it is appreciated that more than one sensor 320 could be deployed on a given support member 100. The sensor 320 may comprise any of variety of sensor types, including but not limited to temperature, humidity, fluid or vibration sensors or combinations thereof. As known in the art, the sensor 320 may be capable of wireless communications (i.e., transmitting sensed data via a wireless channel) or may be wired for such communications. In the latter case, any wiring required for operation of the sensor(s) 320 may also be routed through the passage 106. The sensor 320 may be attached (permanently or removably so) to the support member 100 using a suitable adhesive, mechanical fastener, etc. or combinations thereof. Furthermore, the support member 100 may be configured to include structures (e.g., holes, flanges, notches, etc.; not shown) configured to facilitate attachment of the one or more sensors 320 to the support member. Although the sensor 320 is depicted as being deployed near the apex of an arm 246, and thus in proximity to, or even in contact with, the inner periphery of the channel 304, this is not a requirement and locations of the sensors 320 on the support member may vary as a function of the application. As used herein relative to the one or more sensors 320, sufficient "proximity" may be determined by the capabilities of the given sensor, i.e., a sensor is in proximity to a given location if its deployment is sufficiently close to achieve the desired sensing operation. For example, where the structural member 302 comprises a vehicle axle, it may be desirable to sense excessive heat or vibrations that may be generated during early stages of failure of a wheel bearing. In this case, positioning of a sensor 320 in contact with the axle at an end where the axle is attached to the wheel could permit detection of such conditions. Alternatively, if temperature presented within the channel 304 along the line 306 is a desirable parameter to be measured, then the sensor(s) could be deployed on the support member 100 so as to be in proximity to, or even in contact with, the line 306.

Referring now to FIG. 4, an alternate embodiment of a support member 400 is illustrated in cross-section. As with the prior embodiments, the support member 200 comprises a plurality of arms 422, 424, 426 extending radially away from a longitudinal axis 460 of the conduit 402 forming the support member. However, it is appreciated that each arm could comprise more than two linear sections. This, in this instance, each arm 422, 424, 426 comprises three linear sections rather than two, as illustrated in FIGs. 2 and 3. Thus, for example, a first arm 422 has two linear sections 432a, 432b extending at an angle relative to the longitudinal axis 460 as in FIGs. 2 and 3 (e.g., arm 222 having a first linear section 232a and a second linear section 232b). However, in this embodiment, first arm 422 comprises a third linear section 432c formed between the first linear arm 432a and the second linear arm 432b, preferably in a manner so as to be substantially parallel to the longitudinal axis 460.

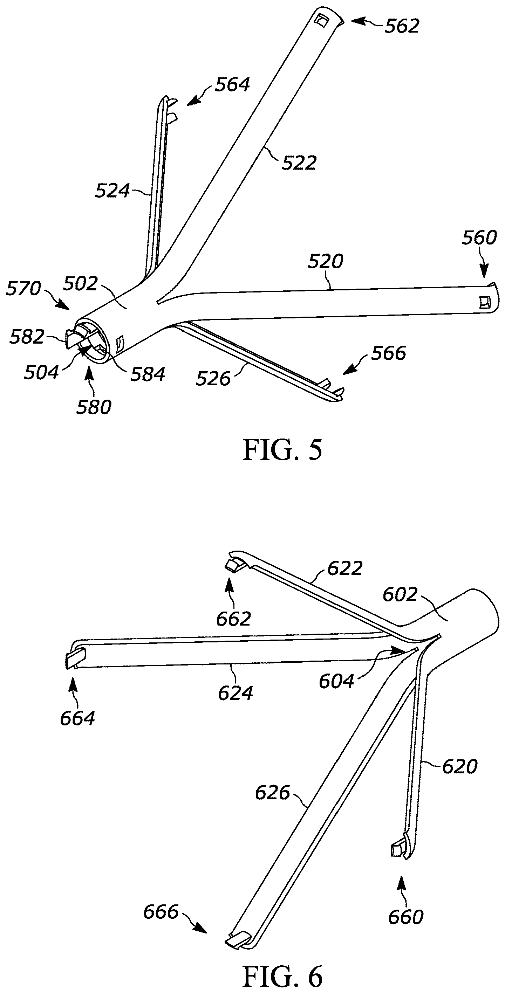

In each of the above-described embodiments, the support member 100, 400 is formed from a single conduit. However, this is not a requirement and an alternate embodiment in which the support member is formed from first and second conduit parts 502, 602 is further illustrated with reference to FIGs. 5-9. In particular, FIG. 5 illustrates a first conduit part 502 and FIG. 6 illustrates a second conduit part 602, each having a passage portion 504, 604 formed therein as described above. As shown, the first conduit part 502 and the second conduit part 602 respectively comprise first linear sections 520, 522, 524, 526 and second linear sections 620, 622, 624, 626. Each of the first linear sections 520, 522, 524, 526 and the second linear sections 620, 622, 624, 626 are preferably configured to have the same length and to form substantially identical angles relative to respective longitudinal axes of the first and second conduit parts 502, 602.

As further shown, each of the first linear sections 520, 522, 524, 526 and the second linear sections 620, 622, 624, 626 is terminated, at a distal end thereof (relative to an end of the respective first and second conduit parts 502, 602 having a slot-free portion as shown), by a complementary arm coupling feature 560, 562, 564, 566, 660, 662, 664, 666. The complementary arm coupling features 560, 562, 564, 566, 660, 662, 664, 666 permit corresponding one of the first linear sections 520, 522, 524, 526 and the second linear sections 620, 622, 624, 626 to be coupled together, thereby forming (in this example) respective first through fourth arms. For example, the complementary arm coupling feature 560 of a first linear section 520 may be mated with the corresponding complementary arm feature 660 of a second linear section 620 to form a first arm; the complementary arm coupling feature 562 of a first linear section 522 may be mated with the corresponding complementary arm feature 662 of a second linear section 622 to form a second arm; the complementary arm coupling feature 564 of a first linear section 524 may be mated with the corresponding complementary arm feature 664 of a second linear section 624 to form a third arm; and the complementary arm coupling feature 566 of a first linear section 526 may be mated with the corresponding complementary arm feature 666 of a second linear section 626 to form a fourth arm.

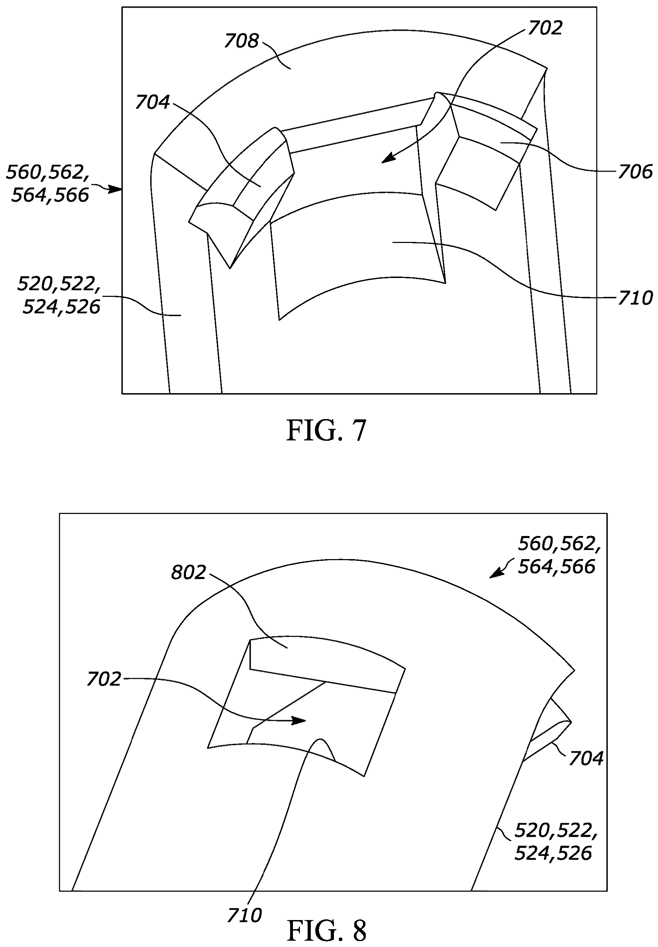

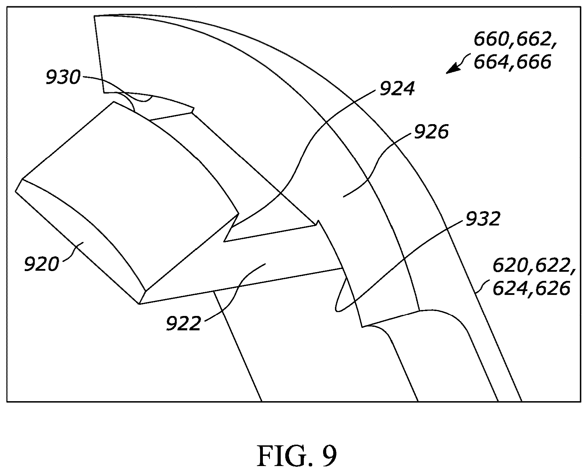

Details of the complementary arm coupling features illustrated in FIGs. 5 and 6 are further illustrated in FIGs. 7-9. In particular, FIGs. 7 and 8 illustrate a version of "female" complimentary arm coupling features 560, 562, 564, 566 as depicted in FIG. 5, whereas FIGs 9 illustrates a version of "male" complimentary arm coupling features 660, 662, 664, 666 depicted in FIG. 6. Referring to FIGs. 7 and 8, the female complementary arm coupling feature comprises a central opening 702 formed at the distal end of the corresponding linear section 520, 522, 524, 526, which central opening 702 is laterally flanked by two projections 704, 706. A substantially planar forward and upper surface 708 is provided above the central opening 702 and a likewise substantially planar rear and lower surface 710 is provided at the back of the central opening 702. As best shown in FIG. 8, the female complementary arm coupling feature further comprises a substantially planar rear and upper surface 802 that is substantially parallel to the rear and lower surface 710.

In contrast, and with reference to FIG. 9, the male complementary arm coupling feature comprises a central projection 920 formed at the distal end of the corresponding linear section 620, 622, 624, 626. The central projection 920 comprises a cantilevered body 922 extending away from a substantially planar forward surface 926 and has a lip or hook portion 924 formed with a forward facing and slanted surface at a distal end (relative to the forward surface 926) thereof. Below the forward surface 926 and flanking the central projection 920 on either side, downward receptacles 930, 932 are formed.

When coupling the male and female complementary arm coupling features together, the central projection 920 is aligned with the central opening 702 and inserted therein, thereby providing a mating engagement between the complementary arm coupling features. This positioning also causes the lateral projections 704, 706 to be aligned with and positioned within the downward receptacles 930, 932. Upper and forward surfaces of the lateral projections 704, 706 are formed to closely match the contours of the respective downward receptacles 930, 932, thereby further stabilizing that mating engagement between the complementary arm coupling features.

In an embodiment, the complementary surfaces of the lateral projections 704, 702 and the downward receptacles 930, 932 tend to cause an upward force on the male complementary arm coupling feature as it is brought into contact with the female complementary arm coupling feature. At the same time, the forward and slanted surface of the lip 924 formed on the central projection 920 contacts an upper surface of the central opening 702, thereby causing a countervailing downward force on the male complementary arm coupling feature. The resulting tension will cause the cantilevered body 922 of the central projection 920 to deflect downward until such time that the lip 924 clears (moves past) the rear and upper surface 802 of the female complementary arm coupling feature, thereby permitting the cantilevered body 922 to resume its normal, undeflected position. The resulting alignment of the lip 924 with the rear and upper surface 802 prevents disengagement of the male complementary arm coupling feature from the female complementary arm coupling feature and thereby ensuring continued provision of a radially extending arm, as described above.

Though a particular embodiment of complementary arm coupling features has been described relative to FIGs. 7-9, those skilled in the art will appreciate that other, functionally equivalent complementary arm coupling features may be equally employed.

Finally, and with reference to FIG. 5, the first conduit part 502 has, at an end 570 thereof having a slot-free portion as shown, a complementary conduit coupling feature 580 disposed thereon, which feature permits the first conduit part 502 to be coupled to another (third) conduit part also having an identically formed complementary conduit coupling feature. In this case, however, rather than having separate "male" and "female" coupling features on different conduit parts, the complementary conduit coupling features are all "hermaphroditic" in that they comprise both projections 582 and corresponding openings 584 permitting substantially rigid coupling of adjacent conduit parts. In particular, each of the complementary conduit coupling features comprises a cantilevered projection 582 having one or more lip formed thereon (much like the central projection 920 depicted in FIG. 9) and one or more openings 584 positioned circumferentially opposite the projections 920, which openings 584 are configured and dimensioned to receive a corresponding one of the lips of a projection 582.

While the various embodiments in accordance with the instant disclosure have been described in conjunction with specific implementations thereof, it is evident that many alternatives, modifications and variations will be apparent to those skilled in the art. Accordingly, the preferred embodiments of the invention as set forth herein are intended to be illustrative only and not limiting so long as the variations thereof come within the scope of the appended claims and their equivalents.

### Clauses:

1. A support member configured to route at least one fluid or electrical line within a channel of a structural member, the support member comprising:
   a conduit having a wall defining a passage configured to receive the at least one line, wherein the passage is configured to permit free movement of the at least one line along a longitudinal axis of the conduit; and
   a plurality of longitudinal slots formed in the wall of the conduit and configured to define, in an expanded state of the support member, a plurality of arms radially extending from the conduit.
2. The support member of clause 1, wherein the conduit and plurality of arms are configured for deployment within a structural member of a vehicle.
3. The support member of clause 2, wherein the structural member is an axle.
4. The support member of clause 1, wherein each arm of the plurality of arms is formed from a portion of the wall.
5. The support member of clause 1, wherein the plurality of arms are spaced apart from each about a circumference of the conduit.
6. The support member of clause 5, wherein the plurality of arms are equally spaced about the circumference of the conduit.
7. The support member of clause 1, wherein the plurality of arms comprises at least two arms.
8. The support member of clause 7, wherein the plurality of arms are configured to contact an inner periphery of the channel.
9. The support member of clause 8, wherein the plurality of arms contact the inner periphery of the channel with sufficient force to retain the support member at a location along a length of the structural member.
10. The support member of clause 1, wherein each arm of the plurality of arms comprises at least two linear sections defining the arm.
11. The support member of clause 10, wherein each arm of the plurality of arms comprises two linear sections defining the arm and forming a triangular shape relative to the longitudinal axis of the conduit.
12. The support member of clause 10, wherein the two linear sections are the same length.
13. The support member of clause 1, wherein the plurality of arms includes a first set of arms at a first location along the longitudinal axis and a second set of arms at a second location along the longitudinal axis.
14. The support member of clause 1, wherein the conduit comprises a first conduit part and second conduit part, where the first conduit part comprises, for each arm of the plurality of arms, a first linear section and where the second conduit comprises, for each arm of the plurality of arms, a second linear section.
15. The support member of clause 14, wherein distal ends of the first and second linear sections comprise complementary arm coupling features configured to connect the first and second linear sections to each other.
16. The support member of clause 14, wherein an end of the first conduit part opposite the first linear section comprises a complimentary conduit coupling feature configured to connect the first conduit part to a third conduit part also comprising the complimentary conduit coupling feature.
17. The support member of clause 1, further comprising: at least one sensor deployed on the support member.
18. The support member of clause 17, wherein the at least one sensor is deployed on the support member such that the sensor is in contact with, or in proximity to, an inner periphery of the channel.
19. The support member of clause 17, wherein the at least one sensor comprises at least one of a temperature sensor, a fluid sensor and a vibration sensor.

## Claims

1. A support member configured to route at least one fluid or electrical line within a channel of a structural member, the support member comprising:
a conduit having a wall defining a passage configured to receive the at least one line, wherein the passage is configured to permit free movement of the at least one line along a longitudinal axis of the conduit; and
a plurality of longitudinal slots formed in the wall of the conduit and configured to define, in an expanded state of the support member, a plurality of arms radially extending from the conduit.

2. The support member of claim 1, wherein the conduit and plurality of arms are configured for deployment within a structural member of a vehicle.

3. The support member of claim 2, wherein the structural member is an axle.

4. The support member of any previous claim, wherein each arm of the plurality of arms is formed from a portion of the wall.

5. The support member of any previous claim, wherein the plurality of arms are spaced apart from each about a circumference of the conduit, optionally wherein the plurality of arms are equally spaced about the circumference of the conduit.

6. The support member of any previous claim, wherein the plurality of arms comprises at least two arms.

7. The support member of claim 6, wherein the plurality of arms are configured to contact an inner periphery of the channel.

8. The support member of claim 7, wherein the plurality of arms contact the inner periphery of the channel with sufficient force to retain the support member at a location along a length of the structural member.

9. The support member of any previous claim, wherein each arm of the plurality of arms comprises at least two linear sections defining the arm, optionally wherein each arm of the plurality of arms comprises two linear sections defining the arm and forming a triangular shape relative to the longitudinal axis of the conduit, optionally wherein the two linear sections are the same length.

10. The support member of any previous claim, wherein the plurality of arms includes a first set of arms at a first location along the longitudinal axis and a second set of arms at a second location along the longitudinal axis.

11. The support member of any previous claim, wherein the conduit comprises a first conduit part and second conduit part, where the first conduit part comprises, for each arm of the plurality of arms, a first linear section and where the second conduit comprises, for each arm of the plurality of arms, a second linear section.

12. The support member of claim 11, wherein distal ends of the first and second linear sections comprise complementary arm coupling features configured to connect the first and second linear sections to each other.

13. The support member of claim 11, wherein an end of the first conduit part opposite the first linear section comprises a complimentary conduit coupling feature configured to connect the first conduit part to a third conduit part also comprising the complimentary conduit coupling feature.

14. The support member of any previous claim, further comprising:
at least one sensor deployed on the support member, optionally wherein the at least one sensor is deployed on the support member such that the sensor is in contact with, or in proximity to, an inner periphery of the channel.

15. The support member of claim 14, wherein the at least one sensor comprises at least one of a temperature sensor, a fluid sensor and a vibration sensor.
